# EUROPEAN PATENT APPLICATION

(11) **EP 4 095 563 A1**
(43) Date of publication of application: **30.11.2022**
(21) Application number: 22165038.5
(22) Date of filing: 29.03.2022
(51) Int. Cl.: G01S 17/931, G01S 17/10, G01S 17/32, G01S 17/42, G01S 17/86, G01S 17/894

(54) **VEHICLE-MOUNTED SENSING SYSTEM AND VEHICLE**

(30) Priority: 25.05.2021 CN 202121130366 U
(71) Applicant: Nio Technology (Anhui) Co., Ltd, Hefei City, Anhui 230601 (CN)
(72) Inventor: CHEN, Jiong, Hefei City, Anhui, 230601 (CN); GAO, Xianglong, Hefei City, Anhui, 230601 (CN); CAI, Yunyue, Hefei City, Anhui, 230601 (CN); ZHANG, Jiangyong, Hefei City, Anhui, 230601 (CN)
(74) Representative: Vossius & Partner Patentanwälte Rechtsanwälte mbB

(57) **Abstract**

The disclosure comprises a vehicle-mounted sensing system and a vehicle with the vehicle-mounted sensing system. The vehicle-mounted sensing system comprises: a plurality of sensor assemblies provided at the specific positions of a vehicle to enable sensing of a specific range around the vehicle, the specific range depending on the purpose of sensing and/or characteristics of the sensor assemblies; and a processing unit configured to process sensing data from the plurality of sensor assemblies to generate sensing results; wherein the sensor assemblies are three-dimensional sensing assemblies. With the vehicle-mounted sensing assembly according to the disclosure, a three-dimensional environment around the vehicle can be accurately sensed, and the sensing results can be applied to operations such as parking.

## Description

### Technical Field

The disclosure relates to the field of automobile control. In particular, the disclosure relates to a vehicle-mounted sensing system and a vehicle having same.

### Background Art

In current advanced assisted driving and automatic driving vehicles, sensors such as cameras and ultrasonic radars are typically used for implementing a look-around sensing function.

However, the camera usually obtains two-dimensional information, and obtains a scene top view by means of methods such as ground projection for applications such as parking space detection and obstacle detection, but this solution may cause loss of height information of an obstacle, thus causing failure in functions such as parking in some special scenes. In addition, the ultrasonic radar may be used for obtaining distance information, but an ultrasonic wave is a mechanical wave having a low resolution, and thus cannot provide accurate three-dimensional information, and functions well only within a relatively close distance range (for example, 2 meters).

### Summary of the Disclosure

According to an aspect of the disclosure, a vehicle-mounted sensing system is provided, the system comprising: a plurality of sensor assemblies provided at specific positions of a vehicle to enable sensing of a specific range around the vehicle, the specific range depending on the purpose of sensing and/or characteristics of the sensor assemblies; and a processing unit configured to process sensing data from the plurality of sensor assemblies to generate sensing results; wherein the sensor assemblies are three-dimensional sensing assemblies.

As an alternative or supplement to the above solution, in the vehicle-mounted sensing system according to an embodiment of the disclosure, the three-dimensional sensing assembly is a laser radar assembly, and the laser radar assembly comprises an emitting apparatus and a receiving apparatus, wherein the emitting apparatus is a vertical-cavity surface-emitting laser (VCSEL), and the receiving apparatus is a single photon avalanche diode (SPAD).

As an alternative or supplement to the above solution, in the vehicle-mounted sensing system according to an embodiment of the disclosure, the arrangement positions of the plurality of sensor assemblies include one or more of the following: a front bumper, a rear bumper, a license plate lamp shell, a trunk lid switch, a vehicle roof, and a vehicle door.

As an alternative or supplement to the above solution, in the vehicle-mounted sensing system according to an embodiment of the disclosure, the arrangement positions are determined on the basis of fields of view (FOVs) of the plurality of sensor assemblies.

As an alternative or supplement to the above solution, in the vehicle-mounted sensing system according to an embodiment of the disclosure, the FOV is at least one of 180°, 120°, 90° and 60°.

As an alternative or supplement to the above solution, in the vehicle-mounted sensing system according to an embodiment of the disclosure, the sensing results are three-dimensional scene information.

As an alternative or supplement to the above solution, in the vehicle-mounted sensing system according to an embodiment of the disclosure, the processing unit is further configured to implement a direct time of flight (dToF) method or an indirect time of flight (iToF) method.

As an alternative or supplement to the above solution, in the vehicle-mounted sensing system according to an embodiment of the disclosure, the sensing data is in the form of point cloud data.

As an alternative or supplement to the above solution, in the vehicle-mounted sensing system according to an embodiment of the disclosure, the point cloud data is processed by a point cloud processing module on the processing unit or a point cloud processing unit independent of the processing unit.

As an alternative or supplement to the above solution, in the vehicle-mounted sensing system according to an embodiment of the disclosure, the specific range is 360 degrees, and the purpose of sensing is any one or both of forward detection and front angle blind zone compensation.

As an alternative or supplement to the above solution, the vehicle-mounted sensing system according to an embodiment of the disclosure further comprises: a control unit configured to generate control signals for the plurality of sensor assemblies.

According to another aspect of the disclosure, a vehicle is provided, which comprises the vehicle-mounted sensing system of any one of the embodiments according to an aspect of the disclosure.

Using the vehicle-mounted sensing assembly according to the disclosure, the three-dimensional environment around the vehicle can be accurately sensed, and the sensing results generated thereby can be applied to operations such as parking, automated valet parking (AVP), blind zone compensation, and obstacle avoidance.

### Brief Description of the Drawings

The above-mentioned and/or other aspects and advantages of the disclosure will become clearer and more comprehensible from the following description of various aspects in conjunction with the accompanying drawings, in which the same or similar units are denoted by the same reference numerals. In the drawings:
Fig. 1 is a schematic block diagram of a vehicle-mounted sensing system 100 according to an embodiment of the disclosure;
Fig. 2 is a schematic diagram of different mounting positions of a plurality of sensor assemblies 110 according to an embodiment of the disclosure;
Fig. 3 illustrates three-dimensional scene generation implemented by the vehicle-mounted sensing system 100 according to an embodiment of the disclosure;
Fig. 4 illustrates a point cloud data processing architecture including a separate point cloud processing unit according to an embodiment of the disclosure; and
Fig. 5 illustrates a point cloud data processing architecture comprising a point cloud processing software module in the processing unit 120 according to an embodiment of the disclosure.

### Detailed Description of Embodiments

In this specification, the disclosure is described more comprehensively with reference to the accompanying drawings showing schematic embodiments of the disclosure. However, the disclosure may be implemented in different forms, and should not be construed as being limited to the embodiments provided herein. The embodiments provided herein are intended to make the disclosure of this specification comprehensive and complete, to more comprehensively convey the scope of protection of the disclosure to those skilled in the art.

The terms such as "include" and "comprise" indicate that in addition to the units and steps that are directly and clearly described in the specification and the claims, other units and steps that are not directly or clearly described are not excluded in the technical solutions of the disclosure. The terms such as "first" and "second" are not used to indicate sequences of units in terms of time, space, size, etc., and are only used to distinguish between the units.

In the embodiment of sensing the surroundings of the vehicle using a look-around camera, it is possible to perform visual synchronous localization and mapping (V-SLAM) and three-dimensional (3D) environment reconstruction in combination with the positioning information of the vehicle itself, etc. However, this operation still makes use of two-dimensional (2D) measurement results of images, reconstruction is performed by a computer vision algorithm, rather than direct measurement on the 3D information of the environment, and thus there may be a difference from a real 3D environment. In embodiments using laser radars, laser radars having a high resolution are typically mounted on a roof of a vehicle and are mostly mechanical rotary laser radars. In addition, since part of sensing signals of the laser radars mounted on the roof of the vehicle is blocked by a vehicle body, the solution is mainly applicable to medium and low speed conditions such as urban areas, and is difficult to be applied to operations such as parking, obstacle avoidance in a short distance due to the existence of a sensing blind zone around the vehicle body.

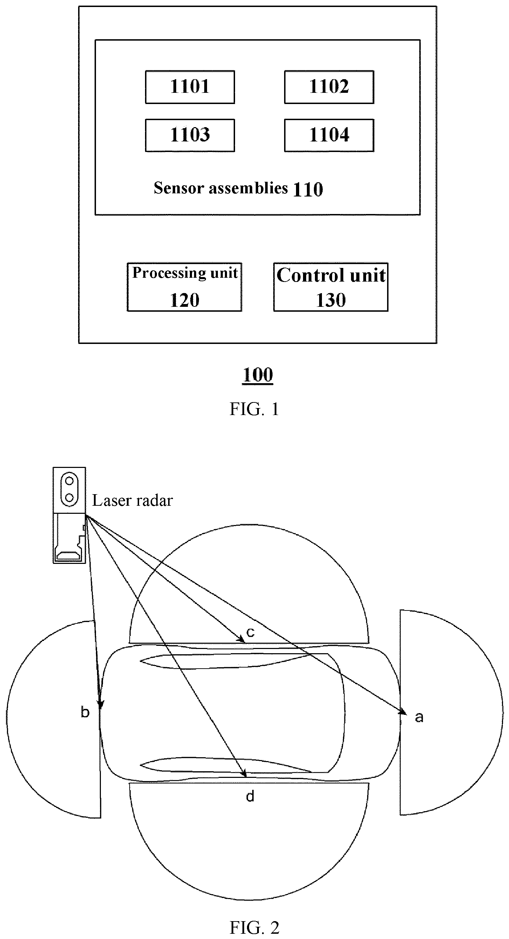

According to an aspect of the disclosure, a vehicle-mounted sensing system 100 is provided. Referring to Fig. 1, the system 100 comprises a plurality of sensor assemblies 110 (for example, sensor assemblies 1101, 1102, 1103, 1104, Fig. 1 only illustrates the four sensor assemblies, but the number of the sensor assemblies 110 may be varied as desired), where each sensor assembly 110 is provided at a particular position of a vehicle to enable sensing of a particular range around the vehicle. The particular range depends on the purpose of sensing, the characteristics of the sensor assemblies 110, etc. For example, the purpose of sensing may be parking assistance, automated valet parking (AVP), blind zone compensation, obstacle avoidance, etc. When the purpose of sensing is parking assistance, due to manual participation, the specific range of sensing may be limited to a blind zone of an angle of view of a driver without covering the whole range to, for example, save power. When the purpose of sensing is AVP, due to full-automated driving, the specific range of sensing may be a 360° range around the whole vehicle to, for example, make it safer and more efficient. The specific range may be 120°, 150°, 180°, 270°, 360°, etc. The vehicle-mounted sensing system 100 further comprises a processing unit 120 configured to process sensing data from the plurality of sensor assemblies 110 to generate sensing results.

The vehicle-mounted sensing system 100 may further comprise a control unit 130 configured to generate control signals for the plurality of sensor assemblies. For example, the control signals may include a start signal, a stop signal, a drive signal, a FOV adjustment signal, a direction adjustment signal, a sensing time signal, etc. for the sensor assemblies. The control signals may be sent to emitting apparatuses in the sensor assemblies 110 to control the emission of, for example, laser light.

The sensor assemblies 110 are three-dimensional sensing assemblies. For example, the sensor assemblies 110 may be three-dimensional sensing assemblies such as structured light assemblies and laser radar assemblies. In an embodiment, a laser radar assembly may comprise an emitting apparatus and a receiving apparatus, where the emitting apparatus may be a vertical-cavity surface-emitting laser (VCSEL), and the receiving apparatus may be a single photon avalanche diode (SPAD). By using the combination of VCSEL + SPAD, a mechanical structure that would otherwise be required may be eliminated, thereby making the sensor assemblies 110 small in size, facilitating installation at most positions on the vehicle (for example, around the vehicle body) or positions otherwise available for installing look-around cameras or ultrasonic radars.

In an embodiment, the plurality of sensor assemblies 110 may be provided at the different positions of the vehicle, including but not limited to: a front bumper, a rear bumper, a license plate lamp shell, a trunk lid switch, a vehicle roof, a vehicle door, etc. The arrangement positions of the sensor assemblies may be determined on the basis of the fields of view (FOVs) of the plurality of sensor assemblies to cover the sensing of a desired range (for example, a full range of 360°) around the vehicle body. The FOV may be 180°, 120°, 90°, 60°, etc. and may be set as any possible value as desired.

Referring to Fig. 2, a schematic installation diagram of sensor assemblies according to an embodiment of the disclosure is shown. In Fig. 2, four sensor assemblies 1101, 1102, 1103 and 1104 are illustrated, which are located substantially at the middle positions of the front side a, the rear side b, the left side c and the right side d of the vehicle respectively. In this embodiment, the FOV of the four sensor assemblies 1101, 1102, 1103, and 1104 is 180°, thereby covering the sensing (which may also be referred to as look-around sensing) of the 360° range around the vehicle body. It will be appreciated that more sensor assemblies 110 may also be used as desired, and the FOV thereof may be set to be less than or greater than 180° to achieve look-around sensing around the vehicle body or sensing of a desired range. As appropriate, in other embodiments, more sensor assemblies 110 may also be provided for overlapping the sensing ranges or FOV, thereby ensuring continued sensing function in the event of failure of part of the sensor assemblies 110, and ensuring the safety of the vehicle and persons in the vehicle.

With the above technical solution, the success rate of automated driving applications such as automatic parking may be improved, and the function of compensating a close-range blind zone in a short distance may also be realized, thereby providing more accurate physical measurement information for cut-in detection of close-range vehicles, close-range vehicle detection and pedestrian detection during automated driving in an urban environment.

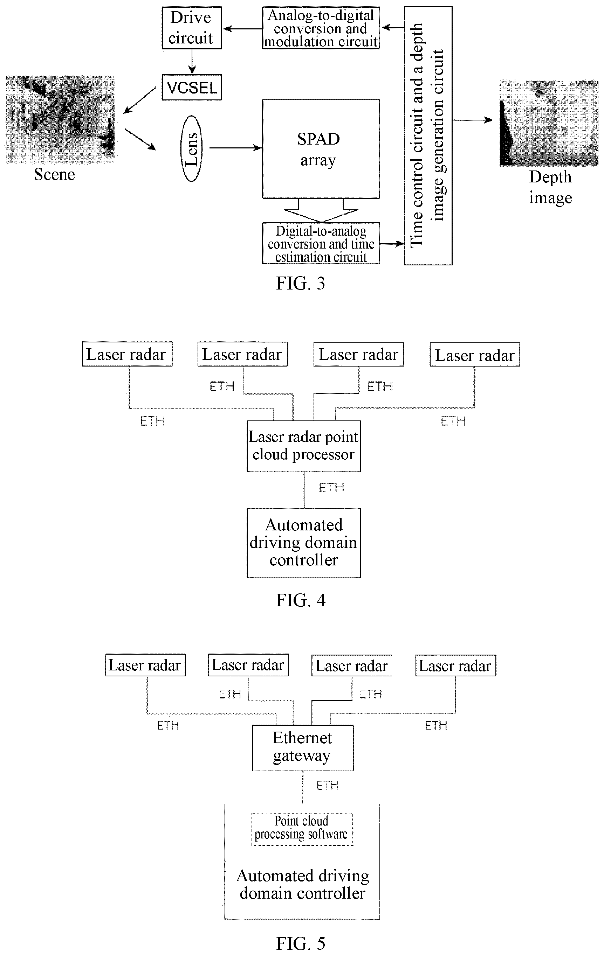

In the vehicle-mounted sensing system 100 according to an embodiment of the disclosure, the sensing result generated by the processing unit 120 is three-dimensional scene information. For example, referring now to Fig. 3, three-dimensional scene generation implemented by the vehicle-mounted sensing system 100 is illustrated. In the embodiment of three-dimensional scene generation of Fig. 3, the control unit 130 (for example, an analog-to-digital conversion and modulation circuit and a digital-to-analog conversion and time estimation circuit in Fig. 3) may be configured to generate control signals for a plurality of sensor assemblies 110 (for example, a combination of a drive circuit, a VCSEL, a lens, and an SPAD array in Fig. 3). For example, the control signals may include a start signal, a stop signal, a drive signal, a FOV adjustment signal, a direction adjustment signal, a sensing time signal, etc. for the sensor assemblies. The control signals may be sent to emitting apparatuses (for example, vertical-cavity surface-emitting laser (VSCEL) apparatuses) in the sensor assemblies 110 to control the emission of, for example, laser light. Result signals are generated after the sensing signals emitted by the emitting apparatuses interacts with an object in a scene. A receiving apparatus (for example, a single photon avalanche diodes (SPAD) array) receives and converts the result signals and sends them as sensing data to the processing unit 120 (for example, a time control circuit and a depth image generation circuit in Fig. 3) for generating sensing results in the form of, such as the three-dimensional scene information and the depth image.

In an embodiment, the sensing data from the sensor assemblies 110 is in the form of point cloud data. In an embodiment, referring to Fig. 4, point cloud data from a plurality of laser radars may be processed (including, but not limited to, a point cloud matching operation, a 3D splicing operation, an obstacle detection operation, a free space generation operation, etc.) by a dedicated point cloud processing unit (for example, a laser radar point cloud processor) independent of the processing unit 120 (for example, an automated driving domain controller) and then transmitted to the processing unit 120. The operations implemented by the dedicated point cloud processing unit may be suitable for applications such as looking around, and advanced driving assistance system (ADAS). In addition, in this embodiment, the plurality of sensor assemblies 110, the processing unit 120, and the point cloud processing unit may be connected via an Ethernet ETH, but various units and components may also be interconnected using different connection technologies as appropriate. By initially processing relevant data using the dedicated point cloud processing unit, the amount of computation of the processing unit 120 may be reduced, reducing the capacity requirements for the processing unit 120.

In another embodiment, referring to Fig. 5, the point cloud data from the plurality of laser radars may be sent to the processing unit 120 via a gateway (for example, an Ethernet gateway), and the processing unit 120 is configured to implement relevant processing on the point cloud data using relevant software modules (for example, point cloud processing software modules) thereon, for example, those described with respect to Fig. 4. In addition, in this embodiment, the plurality of sensor assemblies 110, the processing unit 120, and the gateway are connected via the Ethernet ETH, but the various units and components may be interconnected using different connection technologies as appropriate. By using the point cloud processing software instead of the separate point cloud processor, a circuit structure may be simplified, facilitating the light weight of a hardware circuit and the miniaturization of the device.

The processing unit 120 may also be configured to implement a direct time-of-flight (dToF) method or an indirect time-of-flight (iToF) method to generate sensing results, which is relatively applicable in scenarios using laser radars, in particular laser radars with a VCSEL + SPAD mechanism. Accordingly, in a case where other types of three-dimensional sensing assemblies are used, the processing unit 120 may also be configured to implement a structured light method, a binocular stereoscopic vision methods or the like to generate sensing results. Furthermore, it is to be noted that, in a case where sensors such as conventional sensors and ultrasonic radars are also present in the system, the data thereof may also be used simultaneously to better achieve a function. For example, it is possible to fuse the data from the sensors such as cameras and ultrasonic radars with data from the laser radars as required to facilitate various vehicle functions.

According to another aspect of the disclosure, a vehicle is provide, which comprises the vehicle-mounted sensing system of any one of the embodiments according to an aspect of the disclosure.

Using the vehicle-mounted sensing assembly according to the disclosure, the three-dimensional environment around the vehicle can be accurately sensed, and the sensing results generated thereby can be applied to operations such as parking, automated valet parking (AVP), blind zone compensation, and obstacle avoidance. Thus, a vehicle with the vehicle-mounted sensing system can achieve an efficient and safe parking assistance function, an automated parking functions, etc. and can potentially provide a wide range of possibilities for other functions that need to be achieved with the vehicle-mounted sensing assembly.

The foregoing disclosure is not intended to limit the disclosure to specific forms or particular application fields that are disclosed. Therefore, it is assumed that in view of the disclosure, various alternative embodiments and/or modifications, whether clearly described or implied in this specification, of the disclosure are possible. When the embodiments of the disclosure are described as such, those of ordinary skill in the art would realize that without departing from the scope of the disclosure, changes may be made in forms and details. Therefore, the disclosure is subject only to the claims.

## Claims

1. A vehicle-mounted sensing system, comprising:
a plurality of sensor assemblies provided at the specific positions of a vehicle to enable sensing of a specific range around the vehicle, the specific range depending on a purpose of the sensing and/or characteristics of the sensor assemblies; and
a processing unit configured to process sensing data from the plurality of sensor assemblies to generate sensing results;
wherein the sensor assemblies are three-dimensional sensing assemblies.

2. The system according to claim 1, wherein
the three-dimensional sensing assembly is a laser radar assembly, which comprises an emitting apparatus and a receiving apparatus, the emitting apparatus being a vertical-cavity surface-emitting laser (VCSEL), and the receiving apparatus being a single photon avalanche diode (SPAD).

3. The system according to claim 1 or 2, wherein
arrangement positions of the plurality of sensor assemblies include one or more of the following: a front bumper, a rear bumper, a license plate lamp shell, a trunk lid switch, a vehicle roof, and a vehicle door.

4. The system according to claim 1, 2, or 3, wherein
the arrangement positions are determined on the basis of fields of view (FOVs) of the plurality of sensor assemblies.

5. The system according to claim 4, wherein the FOV is at least one of 180°, 120°, 90° and 60°.

6. The system according to any one of claims 1 to 5, wherein the sensing results are three-dimensional scene information.

7. The system according to any one of claims 1 to 6, wherein the processing unit is further configured to implement a direct time of flight (dToF) method or an indirect time of flight (iToF) method.

8. The system according to any one of claims 1 to 7, wherein the sensing data is in the form of point cloud data.

9. The system according to claim 8, wherein the point cloud data is processed by a point cloud processing module on the processing unit or a point cloud processing unit independent of the processing unit.

10. The system according to any one of claims 1 to 9, wherein the specific range is 360 degrees, and the purpose of the sensing is any one or both of forward detection and front angle blind zone compensation.

11. The system according to any one of claims 1 to 11, further comprising:
a control unit configured to generate control signals for the plurality of sensor assemblies.

12. A vehicle, comprising a vehicle-mounted sensing system, preferably the system according to any one of claims 1 to 11, wherein the system comprises:
a plurality of sensor assemblies provided at the specific positions of a vehicle to enable sensing of a specific range around the vehicle, the specific range depending on a purpose of the sensing and/or characteristics of the sensor assemblies; and
a processing unit configured to process sensing data from the plurality of sensor assemblies to generate sensing results;
wherein the sensor assemblies are three-dimensional sensing assemblies.
